# EUROPEAN PATENT APPLICATION

(11) **EP 4 654 589 A1**
(43) Date of publication of application: **26.11.2025**
(21) Application number: 24835048.0
(22) Date of filing: 06.02.2024
(51) Int. Cl.: H04N 19/85, H04N 19/70

(54) **DECODING METHOD, CODING METHOD, ELECTRONIC DEVICE, AND STORAGE MEDIUM**

(30) Priority: 03.07.2023 CN 202310810364
(71) Applicant: ZTE Corporation, Shenzhen, Guangdong 518057 (CN)
(72) Inventor: GAO, Ying, Shenzhen, Guangdong 518057 (CN); WU, Ping, Shenzhen, Guangdong 518057 (CN); XIE, Shaowei, Shenzhen, Guangdong 518057 (CN); HUANG, Cheng, Shenzhen, Guangdong 518057 (CN); BAI, Yaxian, Shenzhen, Guangdong 518057 (CN)
(74) Representative: Aipex B.V.
(86) International application number: PCT/CN2024/076349
(87) International publication number: WO 2025/007561

(57) **Abstract**

Provided are a decoding method, an encoding method, an electronic device, and a storage medium. The decoding method includes decoding a bitstream to obtain a decoded picture; acquiring film grain adaptive indication information corresponding to the decoded picture; determining film grain parameters corresponding to the decoded picture based on the film grain adaptive indication information; synthesizing film grain corresponding to the decoded picture based on the film grain parameters; and adding the film grain to the decoded picture.

## Description

### TECHNICAL FIELD

This application relates to the field of picture processing, for example, a decoding method, an encoding method, an electronic device, and a storage medium.

### BACKGROUND

Film grain technology is one of the technologies currently under discussion and research in international video coding standardization organizations. In different standards, the film grain modeling and synthesis methods defined are not entirely consistent, and the levels of support for film grain also vary. In the process of picture or video encoding and decoding, typically a single film grain modeling and synthesis method is used, not ensuring suitability for different types of film grain modeling and synthesis and resulting in poor picture quality. For example, the effectiveness of a given film grain model may vary across different types of film grain. Similarly, different film grain models may perform differently in terms of the same type of film grain. Film grain synthesis tends to be more effective for high-resolution pictures and less effective for low-resolution pictures. Furthermore, due to differences in texture or brightness within different regions of the same frame, the encoding methods and parameters used may vary, and a single film grain model may produce different visual effects in different regions of the same frame.

### SUMMARY

This application provides a decoding method, an encoding method, an electronic device, and a storage medium.

An embodiment of this application provides a decoding method. The decoding method is applied to a decoding end. The decoding method includes decoding a bitstream to obtain a decoded picture; acquiring film grain adaptive indication information corresponding to the decoded picture; determining film grain parameters corresponding to the decoded picture based on the film grain adaptive indication information; synthesizing film grain corresponding to the decoded picture based on the film grain parameters; and adding the film grain to the decoded picture.

An embodiment of this application provides an encoding method. The encoding method is applied to an encoding end. The encoding method includes encoding a picture to generate a bitstream; modeling film grain in the picture based on film grain characteristics in the picture; and determining film grain adaptive indication information and writing the film grain adaptive indication information into the bitstream.

An embodiment of this application provides an electronic device. The electronic device includes a memory, a processor, and a computer program stored in the memory and executable by the processor. The processor is configured to perform the decoding method or the encoding method when executing the program.

An embodiment of this application provides a computer-readable storage medium storing a computer program which, when executed by a processor, causes the processor to perform the decoding method or the encoding method.

### BRIEF DESCRIPTION OF DRAWINGS

FIG. 1 is a diagram of a film grain system architecture according to an embodiment.
FIG. 2 is a flowchart of a decoding method according to an embodiment.
FIG. 3 is a flowchart of an encoding method according to an embodiment.
FIG. 4 is a flowchart of decoding a video picture bitstream according to an embodiment.
FIG. 5 is a flowchart illustrating the case where film grain adaptive indication information is film grain model adaptive indication information according to an embodiment.
FIG. 6 is a flowchart illustrating the case where film grain adaptive indication information is film grain region adaptive indication information according to an embodiment.
FIG. 7 is a flowchart illustrating the case where film grain adaptive indication information is film grain layer adaptive indication information according to an embodiment.
FIG. 8 is a flowchart of video picture bitstream encoding according to an embodiment.
FIG. 9 is a diagram illustrating the structure of a decoding apparatus according to an embodiment.
FIG. 10 is a diagram illustrating the structure of an encoding apparatus according to an embodiment.
FIG. 11 is a diagram illustrating the hardware structure of an electronic device according to an embodiment.

### DETAILED DESCRIPTION

This application is described hereinafter in conjunction with the drawings and embodiments. The embodiments described herein are intended to explain this application. For ease of description, the drawings illustrate only part related to this application.

Film grain is generated during the physical processes of exposing and developing photographic film (exposure and development of silver halide crystals) and is widely present in film and television content. However, digital sensors do not undergo these processes, thus producing noise-free digital videos without film grain. Many content creators, especially in the film industry, generally regard film grain as a pleasing type of noise that enhances the natural appearance of video content. Reintroducing film grain into videos can improve the visual experience and is often considered part of the creation intention.

In existing methods, film grain synthesis tends to be more effective for high-resolution pictures and less effective for low-resolution pictures. Furthermore, due to differences in texture or brightness within different regions of the same frame, the encoding methods and parameters used may vary, causing problems such as varying visual effects produced by the same film grain model in different regions of the same frame. The decoding method and the encoding method of this embodiment can perform adaptive film grain modeling and synthesis based on film grain characteristics, enabling more accurate simulation of naturally generated film grain effects and thus providing viewers with an enhanced viewing experience.

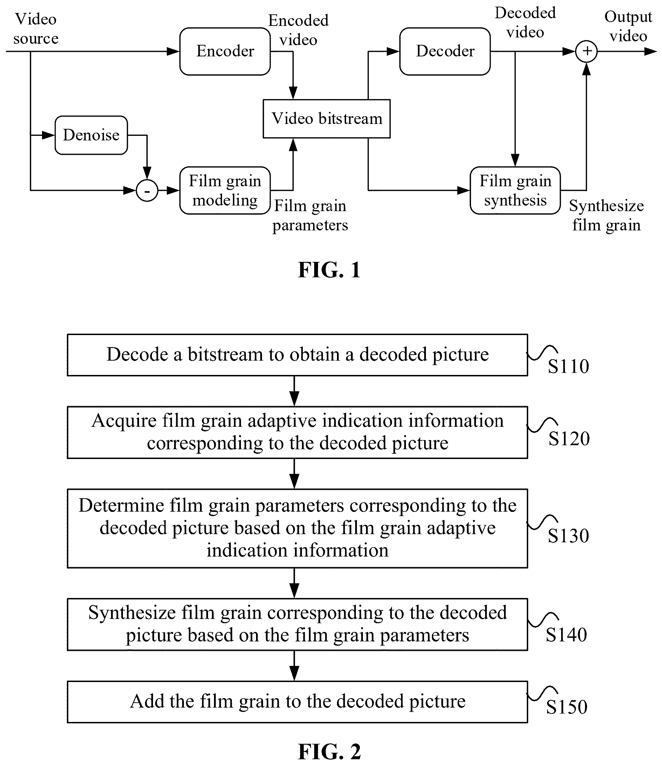

FIG. 1 is a diagram of a film grain system architecture according to an embodiment. As shown in FIG. 1, in the video encoding and decoding standards formulated by the Joint Video Expert Team (JVET), an encoding end first compresses and encodes an input source video picture through an encoder to obtain an encoded video bitstream; and a denoising module preprocesses the input source video picture to denoise the input source video picture (the encoder can also be used to perform the denoising process) and output a video picture sequence where film grain is removed or attenuated. In the film grain modeling process, namely a film grain parameterization process, film grain model parameter values are estimated by analyzing the differences between the denoised video and the source video. The film grain parameters may be transmitted together with the encoded video bitstream to the decoding end or may be provided for the decoding end through a transmission mechanism separate from the bitstream.

At the decoding end, the film grain parameter values are parsed and input into the film grain synthesis process to generate simulated film grain. Before the decoded video is output, the film grain is added to the decoded video, and the reconstructed decoded video with simulated film grain is output.

In addition to the film grain system architecture illustrated in the preceding figure, other implementations of the film grain system architecture also exist, with the main differences lying in the encoding end. For example, the encoding end may encode the denoised video picture sequence instead of encoding the original source video picture sequence to generate the encoded video bitstream. Alternatively, when the source video does not contain film grain, the encoding end may transmit predetermined film grain parameters to the decoding end for film grain synthesis, and in this case, even if the source video does not contain film grain, film grain may be added to the video at the decoding end to achieve a desired effect.

At the 29th JVET meeting, proposal JVET-AC0199 provided film grain quality evaluation results obtained by a frequency-based method and an auto-regression-based method separately. According to the results: 1. For videos with heavy film grain, the synthesized grain is coarse and shows obvious repetitive patterns. 2. For videos with light or low film grain, the grain synthesis effect is good. 3. The frequency-filtering-based film grain synthesis (FGS) method and the auto-regression (AR)-based FGS method show different results under different conditions. This indicates that a single film grain synthesis method cannot achieve good results for all different types of film grain.

In the output document JVET-AC2020, it is also mentioned that the higher the picture resolution, the greater the perceptibility of film grain. Film grain is visibly noticeable in movies and high-definition pictures. Film grain gradually loses its significance in standard-definition pictures and becomes barely perceptible in smaller formats. The H.265/HEVC standard and the H.266/VVC standard already support the concept of multi-layer video coding/scalable video coding. A video bitstream may include a base layer sub-bitstream and at least one enhancement layer sub-bitstream. The enhancement layer sub-bitstream may be either an independent enhancement layer sub-bitstream or a dependent enhancement layer sub-bitstream. The base layer sub-bitstream can be decoded independently to provide low-quality video content. The independent enhancement layer sub-bitstream can also be decoded independently to provide higher-quality video content. The dependent enhancement layer sub-bitstream requires decoding together with the base layer sub-bitstream to provide higher-quality video content. Therefore, in the context of scalable video coding, film grain is more valuable for high-quality video pictures output by a higher enhancement layer and less significant for low-quality video pictures output by the base layer.

In addition, different regions of the same video frame may vary in texture (such as background regions versus key content regions) or brightness (bright regions versus dark regions) and may also use different encoding parameters. As a result, different film grain synthesis methods produce varying visual effects across different regions of the same frame.

Typically, only a single film grain processing method is defined in different standards or proprietary protocols of various vendors, without consideration of the characteristics of film grain in the video picture. Moreover, film grain processing is often adjusted at the level of an entire video sequence or a single video frame, leading to varying visual effects for different regions or different texture characteristics within the same frame. In addition, under scalable coding scenarios, the picture quality after film grain processing cannot be guaranteed for pictures of different qualities output from different layers.

FIG. 2 is a flowchart of a decoding method according to an embodiment. As shown in FIG. 2, the method of this embodiment includes S110 to S150.

In S110, a bitstream is decoded to obtain a decoded picture.

In S120, film grain adaptive indication information corresponding to the decoded picture is acquired.

In S130, film grain parameters corresponding to the decoded picture are determined based on the film grain adaptive indication information.

In S140, film grain corresponding to the decoded picture is synthesized based on the film grain parameters.

In S150, the film grain is added to the decoded picture.

In this embodiment, the decoding end acquires a to-be-decoded bitstream and parses the bitstream to obtain a decoded picture corresponding to the bitstream; acquires film grain adaptive indication information corresponding to the decoded picture, where the film grain adaptive indication information may be included in the bitstream or may be acquired in other preconfigured manners; determines, based on the film grain adaptive indication information, film grain parameters corresponding to the decoded picture, where the parameters may be a set of film grain parameters or multiple sets film grain parameters; and synthesizes film grain corresponding to the decoded picture based on the film grain synthesis method indicated by the flag in the film grain parameters and adds the synthesized film grain to the decoded picture.

In an embodiment, the film grain adaptive indication information includes at least one of film grain model adaptive indication information, film grain region adaptive indication information, or film grain layer adaptive indication information.

In an embodiment, the film grain adaptive indication information includes at least one of a film grain adaptive enabled flag that indicates whether film grain adaptive processing is allowed to be enabled; or a film grain adaptive flag that indicates whether film grain adaptive processing is enabled.

In an embodiment, the film grain parameters include a film grain model parameter and a film grain processing parameter, and the film grain processing parameter corresponds to a film grain processing method corresponding to the film grain model parameter.

In an embodiment, the film grain adaptive indication information includes at least one of a film grain model adaptive enabled flag that indicates whether film grain model adaptive processing is allowed to be enabled; a film grain model adaptive flag that indicates whether film grain model adaptive processing is enabled; or a film grain model adaptive mode that indicates the scope to which a film grain model is applied.

In an embodiment, acquiring the film grain adaptive indication information corresponding to the decoded picture includes determining the film grain model adaptive indication information based on the type of a supplemental enhancement information (SEI) message.

In an embodiment, the film grain adaptive indication information includes film grain model adaptive indication information; and determining the film grain parameters corresponding to the decoded picture based on the film grain adaptive indication information includes determining, based on the film grain model adaptive indication information, whether to switch a film grain model; in response to switching the film grain model, acquiring film grain parameters corresponding to the switched film grain model; and in response to not switching the film grain model, acquiring film grain parameters corresponding to the film grain model not switched.

In an embodiment, the film grain adaptive indication information includes film grain region adaptive indication information; and the film grain region adaptive indication information includes at least one of a film grain region adaptive enabled flag that indicates whether film grain region adaptive processing is allowed to be enabled; a film grain region adaptive flag that indicates whether film grain region adaptive processing is enabled; or region information corresponding to the film grain parameters, where the region information indicates a region in the decoded picture where the film grain parameters are applied.

In an embodiment, the film grain adaptive indication information includes film grain region adaptive indication information; determining the film grain parameters corresponding to the decoded picture based on the film grain adaptive indication information includes acquiring film grain parameters corresponding to different regions in the decoded picture based on the film grain region adaptive indication information; and synthesizing the film grain corresponding to the decoded picture based on the film grain parameters includes synthesizing film grain corresponding to a region of the different regions based on film grain parameters corresponding to the region.

In an embodiment, the film grain adaptive indication information includes film grain layer adaptive indication information; and the film grain layer adaptive indication information includes at least one of a film grain layer adaptive enabled flag that indicates whether film grain layer adaptive processing is allowed to be enabled; a film grain layer adaptive flag that indicates whether film grain layer adaptive processing is enabled; a film grain adaptive layer flag that indicates whether film grain layer adaptive processing is enabled for a layer corresponding to the flag; layer flag information corresponding to the film grain parameters, where the layer flag information indicates a layer flag corresponding to the decoded picture to which the film grain parameters are applied; picture resolution information corresponding to the film grain parameters, where the picture resolution information indicates a picture resolution corresponding to the decoded picture to which the film grain parameters are applied; or a film grain layer adaptive mode that indicates the scope to which film grain layer adaptive processing is applied.

In an embodiment, the film grain adaptive indication information includes film grain layer adaptive indication information; determining the film grain parameters corresponding to the decoded picture based on the film grain adaptive indication information includes acquiring film grain parameters corresponding to different layers in the decoded picture based on the film grain layer adaptive indication information; and synthesizing the film grain corresponding to the decoded picture based on the film grain parameters includes synthesizing film grain corresponding to a layer of the different layers based on film grain parameters corresponding to the layer.

In an embodiment, the film grain adaptive indication information is included in an SEI message, and the SEI message includes at least one of a film grain adaptive enabled flag that indicates whether film grain adaptive processing is allowed to be enabled for a bitstream associated with the SEI message; a film grain adaptive flag that indicates whether film grain model adaptive processing is enabled for a bitstream associated with the SEI message; a film grain base parameter that indicates a film grain base parameter used by a bitstream associated with the SEI message; a film grain layer adaptive flag that indicates whether film grain layer adaptive processing is enabled for a bitstream associated with the SEI message; a film grain model adaptive flag that indicates whether film grain model adaptive processing is enabled for a bitstream associated with the SEI message; a film grain model adaptive mode that indicates the scope to which a film grain model is applied; a film grain layer adaptive mode that indicates whether a film grain layer adaptive processing mode is enabled for a bitstream associated with the SEI message; a film grain region adaptive flag that indicates whether film grain region adaptive processing is enabled for a bitstream associated with the SEI message; a number parameter that indicates the number of rectangular regions to which film grain adaptive processing is applied; a position parameter that indicates the position of a rectangular region to which film grain adaptive processing is applied; a dimension parameter that indicates a dimension of a rectangular region to which film grain adaptive processing is applied; a film grain region model parameter that indicates a film grain model parameter corresponding to a rectangular region to which film grain adaptive processing is applied; or a film grain region processing parameter that indicates a film grain processing parameter corresponding to a rectangular region to which film grain adaptive processing is applied.

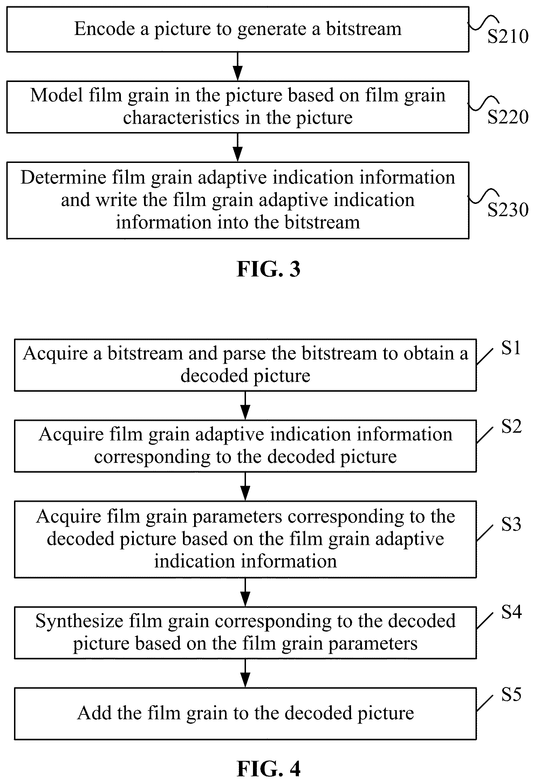

FIG. 3 is a flowchart of an encoding method according to an embodiment. As shown in FIG. 3, the method of this embodiment includes S210 to S230.

In S210, a picture is encoded to generate a bitstream.

In S220, film grain in the picture is modeled based on film grain characteristics in the picture.

In S230, film grain adaptive indication information is determined and written into the bitstream.

In this embodiment, a picture is acquired. The picture may be a single picture or a frame in a video sequence. The picture is encoded to generate a bitstream. The film grain characteristics may refer to the film grain characteristics of the entire picture or film grain characteristics of different regions within the picture. The film grain characteristics include the intensity of film grain and a scaling parameter of film grain. Film grain in the picture is modeled based on the film grain characteristics in the picture. Film grain adaptive indication information corresponding to the picture is determined based on the used adaptive film grain modeling process and is written into the bitstream.

In an embodiment, the film grain adaptive indication information includes at least one of film grain model adaptive indication information, film grain region adaptive indication information, or film grain layer adaptive indication information.

In an embodiment, the film grain adaptive indication information includes at least one of a film grain adaptive enabled flag that indicates whether film grain adaptive processing is allowed to be enabled; or a film grain adaptive flag that indicates whether film grain adaptive processing is enabled.

In an embodiment, modeling the film grain in the picture based on the film grain characteristics in the picture includes at least one of the following: performing model adaptive film grain modeling on the film grain in the picture based on the film grain characteristics in the picture; performing region adaptive film grain modeling on the film grain in the picture based on the film grain characteristics in the picture; or performing layer adaptive film grain modeling on the film grain in the picture based on the film grain characteristics in the picture.

The following provides an exemplary description of the data transmission method by way of embodiments.

In the following embodiments, a film grain model adaptive processing method, a film grain region adaptive processing method, and a film grain layer adaptive processing method are described. The film grain adaptive processing method may include any one or more of the film grain model adaptive processing method, the film grain region adaptive processing method, and the film grain layer adaptive processing method.

### Embodiment one

Film grain is difficult to encode using a video picture coding tool. Video picture compression heavily relies on prediction in the temporal, spatial, or cross-component domain while film grain is inherently random. To preserve film grain, one solution involves retaining more details during video compression by applying lower quantization parameters, which requires a relatively high bitrate for video applications such as adaptive streaming and broadcasting. Another solution involves modeling film grain at the encoding end to obtain film grain parameters and synthesizing the film grain at the decoding end by using these parameters, and the synthesized grain is then added to the decoded video picture, allowing better use of video compression techniques. For example, the High Efficiency Video Coding (H.265/HEVC) standard and the Versatile Video Coding (H.266/VVC) standard series, developed by the Joint Video Expert Team (JVET) under the International Organization for Standardization (ISO)/International Electrotechnical Commission (IEC) and the International Telecommunication Union (ITU), use Film Grain Characteristic (FGC) Supplemental Enhancement Information (SEI) messages to indicate film grain parameters used for film grain synthesis during video or picture decoding and rendering, thereby achieving film grain preservation.

This embodiment provides a decoding method for a video picture bitstream. The decoding method is applied to a decoding apparatus for a video picture bitstream. The input of the apparatus is a video picture bitstream or a media file. The output of the apparatus is a reconstructed decoded video picture. FIG. 4 is a flowchart of decoding a video picture bitstream according to an embodiment. As shown in FIG. 4, the method includes the following:

In S1, a bitstream is acquired and parsed to obtain a decoded picture.

The decoding end acquires a to-be-decoded bitstream and parses the bitstream to obtain the decoded picture corresponding to the bitstream. The parsing of the bitstream to obtain the decoded picture may be implemented using the method specified in the video coding and decoding standard corresponding to the type of the bitstream.

A video is composed of a sequence of consecutive pictures. The method of this embodiment of this application can be applied to a single picture or to a frame in a video sequence. Therefore, the terms such as video, video picture, or picture mentioned in the following description can be used interchangeably.

In S2, film grain adaptive indication information corresponding to the decoded picture is acquired.

There is no inherent sequence between acquiring film grain adaptive indication information corresponding to the decoded picture in S2 and parsing a bitstream in S1 It is feasible to perform the parsing step in S1 and the acquiring step in S2 simultaneously, to perform the parsing step in S1 before the acquiring step in S2, or to perform the acquiring step in S2 before the parsing step in S1.

The film grain adaptive indication information may be a film grain adaptive flag (fg_adaptive_flag) that indicates whether film grain adaptive processing is enabled. The film grain adaptive indication information may also include a film grain adaptive enabled flag (fg_adaptive_enabled_flag) that indicates whether film grain adaptive processing is allowed to be enabled. When the value of fg_adaptive_enabled_flag is 1, it is indicated that film grain adaptive processing is allowed to be enabled. In this case, whether to enable film grain adaptive processing is further determined based on the film grain adaptive flag.

The film grain adaptive flag should include at least one of a film grain model adaptive flag, a film grain region adaptive flag, or a film grain layer adaptive flag. The film grain adaptive enabled flag should include at least one of a film grain model adaptive enabled flag, a film grain region adaptive enabled flag, or a film grain layer adaptive enabled flag.

The film grain adaptive indication information may be included in the bitstream. For example: when the film grain model adaptive indication flag fg_adaptive_flag is included in a video parameter set (VPS), the film grain adaptive indication information indicates whether film grain adaptive processing is enabled for the entire video. When the film grain adaptive indication information is included in a sequence parameter set (SPS), the film grain model adaptive indication information indicates whether film grain model adaptive processing is enabled for the video picture sequence corresponding to the sequence parameter set (SPS). When the film grain model adaptive indication information is included in a picture parameter set (PPS) or an adaptive parameter set (APS), the film grain model adaptive indication information indicates whether film grain model adaptive processing is enabled for the frame corresponding to the picture parameter set or the adaptive parameter set. When the film grain model adaptive indication information is included in a supplemental enhancement information (SEI) message, the film grain model adaptive indication information indicates whether film grain model adaptive processing is enabled for the frame corresponding to the SEI message.

If the video parameter set includes the film grain adaptive flag vps_fg_adaptive_flag, and the sequence parameter set also includes the film grain model adaptive flag pps_fg_adaptive_flag, when the value of vps_fg_adaptive_flag and the value of pps_fg_adaptive_flag are inconsistent, the determination of whether film grain model adaptive processing is allowed to be enabled for the sequence corresponding to the sequence parameter set may be based on the value of pps_fg_adaptive_flag.

Different film grain adaptive indication information may be entirely or separately included in one or more of the following locations: the VPS, the SPS, the PPS, the APS, or the SEI message.

The film grain adaptive indication information may be included in the bitstream or may be acquired in other preconfigured manners. When the film grain adaptive indication information includes multiple types of film grain adaptive indication information, the multiple types of film grain adaptive indication information may be partially acquired from the bitstream and partially acquired in a preconfigured manner or other manners.

In S3, film grain parameters corresponding to the decoded picture are acquired (that is, determined) based on the film grain adaptive indication information.

The film grain parameters include film grain model parameters and film grain processing parameters corresponding to the film grain processing method indicated by the film grain model parameters. The film grain model parameters may be film grain model flags. The film grain processing parameters may be film grain synthesis parameters or film grain modeling parameters. For example, when the film grain model flag indicates that a frequency-filtering-based film grain synthesis method is used, the corresponding film grain processing parameters may include the luminance bit depth parameter (fg_bit_depth_luma_minus8), chroma bit depth parameter (fg_bit_depth_chroma_minus8), picture colour primaries parameter (fg_colour_primaries), colour space parameter (fg_matric_coeffs), and transfer characteristics parameter (fg_transfer_characteristics) of the film grain, the blending mode parameter between the film grain and the decoded picture (fg_blending_mode_id), the film grain scaling parameter (fg_log2_scale_factor), the film grain model number parameter for intensity intervals of different colour components (fg_num_model_values_minus1[c]), and the film grain model values corresponding to intensity intervals of different colour components (fg_comp_model_value[c][i][j]).

The film grain parameters corresponding to the decoded picture may be a set of film grain parameters or multiple sets of film grain parameters. For example, as described in S2, when the film grain adaptive indication information includes film grain region adaptive indication information, the film grain parameters corresponding to the decoded picture may include multiple sets of film grain parameters corresponding to different regions in the decoded picture.

In S4, film grain corresponding to the decoded picture is synthesized based on the film grain parameters.

The film grain corresponding to the decoded picture is synthesized based on the film grain model flag contained in the film grain parameters and the film grain parameters corresponding to the film grain synthesis method indicated by the film grain model flag.

When the film grain adaptive indication information includes the film grain region adaptive indication information, the film grain corresponding to the decoded picture includes the film grain corresponding to each region of the decoded picture.

In S5, the film grain is added to the decoded picture.

The method for adding the film grain to the decoded picture may use an additive mode or a multiplicative mode. The method for adding the film grain to the decoded picture may be specified by the blending mode parameter between the film grain and the decoded picture included in the film grain parameters in S3 or may be determined by the decoding end based on preconfigured parameters.

### Embodiment two

Under normal circumstances, different standards or proprietary protocols from various manufacturers generally define only one film grain processing method, without considering the provision of the film grain model adaptive processing method based on the film grain characteristics in a video picture to achieve better visual effects.

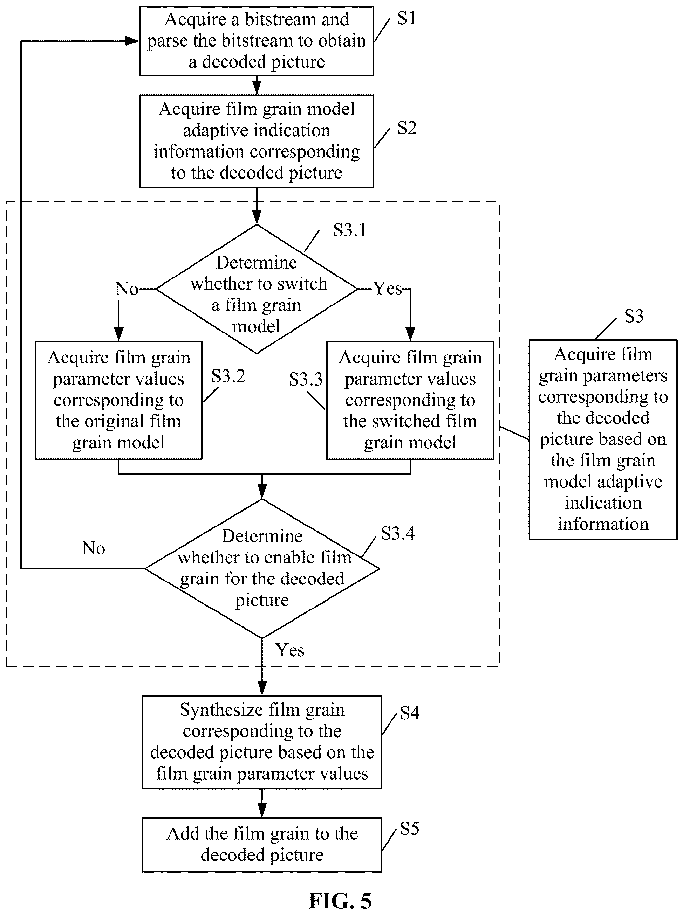

This embodiment provides a decoding method for a video picture bitstream. The decoding method is applied to a decoding apparatus for a video picture bitstream. The input of the apparatus is a video picture bitstream or a media file. The output of the apparatus is a reconstructed decoded video picture. FIG. 5 is a flowchart illustrating the case where film grain adaptive indication information is film grain model adaptive indication information according to an embodiment. As shown in FIG. 5, the method includes the following:

In S1, a bitstream is acquired and parsed to obtain a decoded picture.

In S2, film grain model adaptive indication information corresponding to the decoded picture is acquired.

Referring to S2 of embodiment one, the film grain adaptive indication information of this embodiment is film grain model adaptive indication information. The film grain model adaptive indication information corresponding to the decoded picture is acquired. The film grain model adaptive indication information may include a film grain model adaptive flag fg_model_adaptive_flag that indicates whether film grain model adaptive processing is enabled and may also include a film grain adaptive enabled flag fg_adaptive_enabled_flag that indicates whether film grain adaptive processing is allowed to be enabled.

Table 1 describes the relevant syntax elements and semantic information by way of example in which the film grain model adaptive enabled flag is included in a video parameter set.

**Table 1 Syntax of the film grain model adaptive enabled flag in the video parameter set**

| | |
|---|---|
| video_parameter_set_rbsp() { | Descriptor |
| ...... | |
| vps_fg_adaptive_enabled_flag | u(1) |
| ...... | |
| } | |

The value 0 of vps_fg_adaptive_enabled_flag indicates that film grain adaptive processing is not allowed to be enabled for the video sequence. The value 1 of vps_fg_adaptive_enabled_flag indicates that film grain adaptive processing is allowed to be enabled for the video sequence.

Table 2 describes the relevant syntax elements and semantic information by way of example in which the film grain model adaptive enabled flag and the film grain adaptive flag are included in a picture parameter set.

**Table 2 Syntax of the film grain model adaptive enabled flag and the film grain adaptive flag in the picture parameter set**

| | |
|---|---|
| picture_parameter_set_rbsp() { | Descriptor |
| ...... | |
| pps_fg_adaptive_enabled_flag | u(1) |
| if (pps_fg_adaptive_enabled_flag) | |
| pps_fg_model_adaptive_flag | u(1) |
| ...... | |
| | |

The value 0 of pps_fg_adaptive_enabled_flag indicates that film grain adaptive processing is not allowed to be enabled for the video picture. The value 1 of pps_fg_adaptive_enabled_flag indicates that film grain adaptive processing is allowed to be enabled for the video picture. The value 0 of pps_fg_model_adaptive_flag indicates that film grain model adaptive processing is not enabled for the video picture. The value 1 of pps_fg_model_adaptive_flag indicates that film grain model adaptive processing is enabled for the video picture.

The film grain model adaptive indication information may also be a film grain model adaptive mode that indicates the adaptive scope of the switched film grain model, that is, the scope to which the switched film grain model is applied. Table 3 describes the relevant syntax elements and semantic information by way of example in which the film grain model adaptive mode is included in a picture parameter set.

**Table 3 Syntax of the film grain model adaptive flag in the picture parameter set**

| | |
|---|---|
| pic_parameter_set_rbsp() { | Descriptor |
| ...... | |
| pic_fg_model_adaptive_mode | u(1) |
| ...... | |
| } | |

pic_fg_model_adaptive_mode is the film grain model adaptive mode. When the value of pic_fg_model_adaptive_mode is 0, it is indicated that the model switching applies to only a picture corresponding to the current parameter set, that is, the newly switched film grain model and parameters apply to only a picture corresponding to the current parameter set. When the value of pic_fg_model_adaptive_mode is 1, it is indicated that the model switching applies to a picture corresponding to the current parameter set and all subsequent pictures, that is, the film grain model and parameters received after the current parameter set apply to a picture corresponding to the current parameter set and all subsequent pictures until new film grain model and parameters are received. The film grain model adaptive indication information may also be implicitly derived by the presence of different types of SEI messages carrying different film grain models. For example, the film grain parameters corresponding to the previous decoded picture are transmitted using an FGC SEI message, and the film grain parameters corresponding to the current decoded picture are transmitted using an SEI message of type user_data_unregistered or user_data_registered_itu_t_t35; therefore, the two different types of SEI messages carrying film grain parameters can be considered as film grain model adaptive indication information.

In S3, film grain parameters corresponding to the decoded picture are acquired based on the film grain model adaptive indication information.

S3 of this embodiment may include S3.1 to S3.4.

In S3.1, it is determined, based on the film grain model adaptive indication information, whether to switch a film grain model; if yes, S3.3 is performed; and if no, S3.2 is performed.

In S3.2, film grain parameter values corresponding to the original film grain model are acquired.

The original film grain model refers to the film grain model corresponding to the previous decoded picture. The previous decoded picture refers to a decoded picture obtained by bitstream parsing before the current decoded picture. Therefore, acquiring the film grain parameters corresponding to the original film grain model includes the following three cases: In the first case, the film grain parameter values used by the current decoded picture are exactly the same as those of the previous decoded picture, and the film grain parameters corresponding to the previous decoded picture are acquired. In the second case, the film grain parameter values used by the current decoded picture differ from those of the previous decoded picture, and the film grain parameters corresponding to the current decoded picture are acquired by bitstream parsing or in other out-of-band transmission manners. In the third case, the film grain parameter values used by the current decoded picture partially differ from those of the previous decoded picture; and part of the film grain parameters corresponding to the current decoded picture are acquired by bitstream parsing or in other out-of-band transmission manners, and the remaining film grain parameters corresponding to the current decoded picture are acquired from the film grain parameters corresponding to the previous decoded picture.

In S3.3, film grain parameter values corresponding to the switched film grain model are acquired.

The film grain parameter values corresponding to the switched film grain model are acquired by bitstream parsing or in other out-of-band transmission manners.

In S3.4, it is determined whether to enable film grain for the decoded picture; if yes, S4 is performed; otherwise, the process returns to S1.

S3.4 is an optional operation. For example, when it is allowed to add film grain to some pictures in a video sequence and add no film grain to some other pictures in the video sequence, S3.4 is performed; otherwise, S4 is performed.

When it is allowed to add film grain to some pictures in a video sequence and add no film grain to some other pictures in the video sequence, the film grain parameter values corresponding to the film grain model acquired in S3.2 or S3.3 may be empty, indicating that film grain is not enabled.

In S4, film grain corresponding to the decoded picture is synthesized based on the film grain parameter values.

In S5, the film grain is added to the decoded picture.

### Embodiment three

Film grain processing is often adjusted for one video sequence or one frame of video picture, without considering providing a film grain region adaptive processing method based on film grain characteristics, picture texture characteristics, etc. in different regions of the picture.

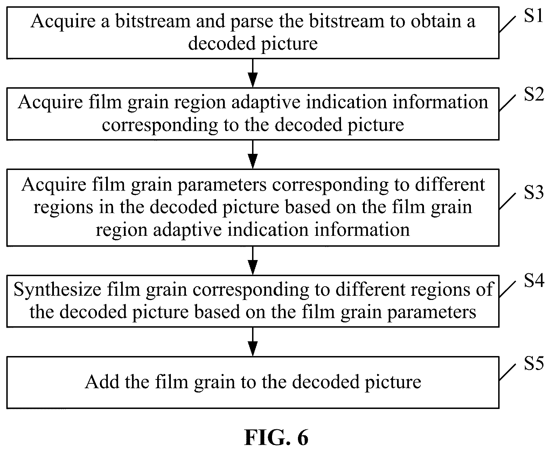

This embodiment provides a decoding method for a video picture bitstream. The decoding method is applied to a decoding apparatus for a video picture bitstream. The input of the apparatus is a video picture bitstream or a media file. The output of the apparatus is a reconstructed decoded video picture. FIG. 6 is a flowchart illustrating the case where film grain adaptive indication information is film grain region adaptive indication information according to an embodiment. As shown in FIG. 6, the method includes the following:

In S1, a bitstream is acquired and parsed to obtain a decoded picture.

In S2, film grain region adaptive indication information corresponding to the decoded picture is acquired.

Referring to S2 of embodiment one, the film grain adaptive indication information of this embodiment is film grain region adaptive indication information, and film grain region adaptive indication information corresponding to the decoded picture is acquired.

Film grain parameters corresponding to different regions in the decoded picture can be determined based on the film grain region adaptive indication information.

The film grain region adaptive indication information may be a film grain region adaptive enabled flag that indicates whether film grain region adaptive processing is allowed to be enabled.

The film grain region adaptive indication information may be a film grain region adaptive flag fg_region_adaptive_flag that indicates whether film grain region adaptive processing is enabled for the video picture. The flag may be included in a video parameter set (VPS), a sequence parameter set (SPS), a picture parameter set (PPS), an adaptive parameter set (APS), or an SEI message. Table 4 describes the relevant syntax elements and semantic information by way of example in which the film grain region adaptive enabled flag and the film grain region adaptive flag are included in a picture parameter set.

**Table 4 Syntax of the film grain region adaptive enabled flag and the film grain adaptive flag in the picture parameter set**

| | |
|---|---|
| picture_parameter_set_rbsp() { | Descriptor |
| ...... | |
| pps_fg_adaptive_enabled_flag | u(1) |
| if (pps_fg_adaptive_enabled_flag) | |
| pps_fg_region_adaptive_flag | u(1) |
| ...... | |
| | |

The value 0 of pps_fg_adaptive_enabled_flag indicates that film grain adaptive processing is not allowed to be enabled for the video picture. The value 1 of pps_fg_adaptive_enabled_flag indicates that film grain adaptive processing is allowed to be enabled for the video picture. The value 0 of pps_fg_region_adaptive_flag indicates that film grain region adaptive processing is not enabled for the video picture. The value 1 of pps_fg_region_adaptive_flag indicates that film grain region adaptive processing is enabled for the video picture.

The film grain region adaptive indication information may also be region information corresponding to film grain parameters. The region information corresponding to the film grain parameters indicates the region where the film grain parameters are applied in the decoded picture. The film grain region adaptive indication information may include multiple pieces of region information corresponding to different film grain parameters. These multiple pieces of region information corresponding to different film grain parameters may represent that each set of film grain parameters/each film grain parameter corresponds to one or more pieces of region information; or these multiple pieces of region information corresponding to different film grain parameters may include region information corresponding to one set of primary film grain parameters/one primary film grain parameter and at least one another set of film grain parameters/at least one another film grain parameter. The one set of primary film grain parameters/one primary film grain parameter is applied to regions of the decoded picture other than regions indicated by the region information corresponding to at least one another set of film grain parameters/at least one another film grain parameter. For example, Table 5 describes the relevant syntax elements and semantic information by way of example in which region information of film grain adaptive processing is included in a picture parameter set.

**Table 5 Syntax of the region information of film grain adaptive processing in the picture parameter set**

| | |
|---|---|
| picture_parameter_set_rbsp() { | Descriptor |
| ...... | |
| pps_fg_adaptive_enabled_flag | u(1) |
| if (pps_fg_adaptive_enabled_flag) { | |
| num_of_adaptive_regions | ue(v) |
| for(i=0; i <= num_of_adaptive_regions; i++){ | |
| pps_fg_region_info[i] | |
| fg_region_parameters[i]() | |
| } | |
| } | |
| ...... | |
| } | |

The value 0 of pps_fg_adaptive_enabled_flag indicates that film grain adaptive processing is not allowed to be enabled for the video picture. The value 1 of pps_fg_adaptive_enabled_flag indicates that film grain adaptive processing is allowed to be enabled for the video picture. pps_num_of_adaptive_regions indicates the number of film grain adaptive processing regions. fg_region_info[i] indicates information about the ith film grain adaptive processing region.

The region information can be described by the region position and size. For example, the position of the top-right corner vertex and the width and height can define a rectangular region. The region information can also be described by the block size and serial number, for example, the position of the 8th 8×8 adaptive processing block. The size of the adaptive processing block can be preset or determined in other manners. For example, several optional sizes and their order can be defined. The size of the adaptive block used can be known from the given serial number.

fg_region_parameters[i]() indicates the film grain parameters corresponding to the ith film grain adaptive processing region.

In S3, film grain parameters corresponding to different regions in the decoded picture are acquired based on the film grain region adaptive indication information.

According to the description of S3 of embodiment one and the description of embodiment two, the film grain parameters corresponding to different regions may include the following two cases: Different regions correspond to the same film grain model parameter but different film grain modeling parameters; or different regions correspond to different film grain model parameters and different film grain modeling parameters.

In S4, film grain corresponding to different regions of the decoded picture is synthesized based on the film grain parameters.

Based on the film grain model flag in the film grain parameters and based on the film grain parameters corresponding to the film grain synthesis method indicated by the film grain model flag, the film grain corresponding to each region of the decoded picture is synthesized.

When the film grain adaptive indication information includes film grain region adaptive indication information, the film grain corresponding to the decoded picture may include different film grains corresponding to different regions of the decoded picture.

In S5, the film grain is added to the decoded picture.

According to the descriptions of S3 and S4, the film grain is added to the corresponding regions of the decoded picture.

### Embodiment four

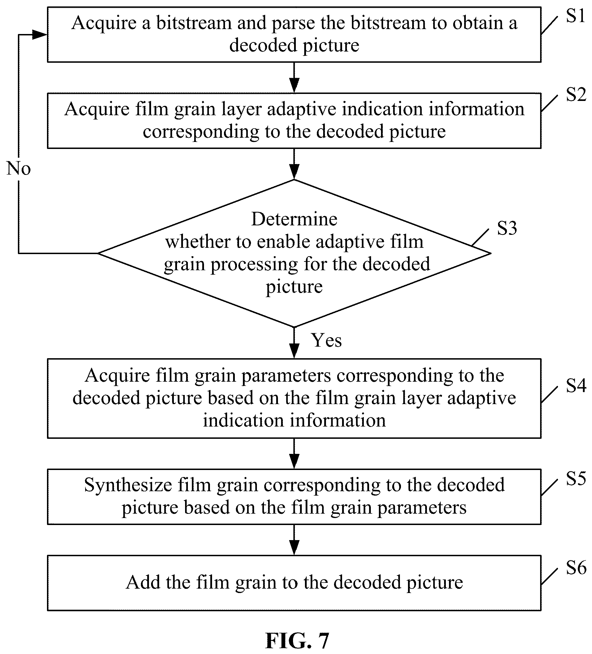

This embodiment provides a decoding method for a video picture bitstream. The decoding method is applied to a decoding apparatus for a video picture bitstream. The input of the apparatus is a video picture bitstream or a media file. The output of the apparatus is a reconstructed decoded video picture. The method provides film grain layer adaptive processing for pictures of different qualities output from different layers in a scalable coding scenario. FIG. 7 is a flowchart illustrating the case where film grain adaptive indication information is film grain layer adaptive indication information according to an embodiment. As shown in FIG. 7, the method includes the following:

In S1, a bitstream is acquired and parsed to obtain a decoded picture.

The bitstream in this embodiment is a multilayer video coding bitstream. The multilayer video coding bitstream can also be called a scalable video coding bitstream. The multilayer video coding bitstream may include a base layer sub-bitstream and at least one enhancement layer sub-bitstream. The enhancement layer sub-bitstream may be an independent enhancement layer sub-bitstream or a dependent enhancement layer sub-bitstream. Using the H.266/VVC coding and decoding standard as an example, when the value of the syntax element vps_max_layers_minus1 in the video parameter set (VPS) is not zero, it can be determined that the bitstream is a multilayer video coding bitstream. Further, when the value of the syntax element vps_independent_layer_flag[i] (i > 0) in the VPS is equal to 0, it is indicated that the ith enhancement layer is a dependent enhancement layer; and when vps_independent_layer_flag[i] (i > 0) is equal to 1, it is indicated that the ith enhancement layer is an independent enhancement layer. The base layer sub-bitstream can be independently decoded to provide low-quality video content. Generally, the base layer sub-bitstream can be independently decoded to provide video picture content of lower quality or lower resolution, and the independent enhancement layer sub-bitstream can be independently decoded to provide video picture content of higher quality or higher resolution. The dependent enhancement layer sub-bitstream needs to be decoded together with the base layer sub-bitstream to provide video picture content of higher quality or higher resolution.

Therefore, the decoded pictures obtained through parsing in this operation may be decoded pictures of the same frame with different quality or different resolution.

In S2, film grain layer adaptive indication information corresponding to the decoded picture is acquired.

Referring to S2 of embodiment one, the film grain adaptive indication information of this embodiment is film grain layer adaptive indication information. The film grain layer adaptive indication information corresponding to the decoded picture is acquired.

Based on the film grain layer adaptive indication information, decoded pictures corresponding to different layers can correspond to different film grain parameters, and decoded pictures corresponding to different layers can have different picture quality or different resolution.

The film grain layer adaptive indication information may be a film grain layer adaptive enabled flag that indicates whether film grain layer adaptive processing is allowed to be enabled.

The film grain layer adaptive indication information may be a film grain layer adaptive flag fg_layers_adaptive_flag that indicates whether film grain layer adaptive processing is enabled for the video picture. The value 1 of fg_layers_adaptive_flag indicates that film grain layer adaptive processing is enabled for the bitstream. The value 0 of fg_layers_adaptive_flag indicates that film grain layer adaptive processing is not enabled for the bitstream. The flag may be included in the VPS, the SPS, the PPS, the APS, or the SEI message.

The film grain layer adaptive indication information may also be layer flag information corresponding to the film grain parameters or picture resolution information corresponding to the film grain parameters. The layer flag information corresponding to the film grain parameters indicates the layer flag of the decoded picture to which the film grain parameters are applied. The picture resolution information corresponding to the film grain parameters indicates the resolution of the decoded picture to which the film grain parameters are applied. For example, Table 6 describes the relevant syntax elements and semantic information by way of example in which the layer information of film grain adaptive processing is included in the video parameter set.

**Table 6 Syntax of the layer information of film grain adaptive processing in the video parameter set**

| | |
|---|---|
| video_parameter_set_rbsp() { | Descriptor |
| ...... | |
| vps_max_layers_minus1 | u(6) |
| vps_fg_adaptive_enabled_flag | u(1) |
| if (vps_fg_adaptive_enabled_flag) { | |
| for(i=0; i <= vps_max_layers_minus1; i++) { | |
| vps_fg_layer_adaptive_flag[i] | u(1) |
| if (vps_fg_layer_adaptive_flag | |
| fg_layer_parameters[i]() | |
| } | |
| } | |
| ...... | |
| } | |

vps_max_layers_minus1: after added by 1, indicates the maximum number of coding layers contained in the bitstream. vps_fg_adaptive_enabled_flag: when set to 0, indicates that film grain adaptive processing is not allowed to be enabled and, when set to 1, indicates that film grain adaptive processing is allowed to be enabled. vps_fg_layer_adaptive_flag[i]: when set to 0, indicates that film grain adaptive processing is not enabled for the coding layer with layer flag i and, when set to 1, indicates that film grain adaptive processing is enabled for the coding layer with layer flag i. fg_layer_parameters[i]() indicates the film grain parameters corresponding to the coding layer with layer flag i.

The film grain layer adaptive indication information may include layer flag information corresponding to different film grain parameters. For example, when the layer flag is 0, one set of film grain parameters apply; when the layer flag is 1, another set of film grain parameters apply; and when the layer flag is 2, yet another set of film grain parameters apply. For another example, when the layer flag is greater than or equal to given threshold a (0 < a < 6), one set of film grain parameters apply; and when the layer flag is less than a, another set of film grain parameters or no film grain parameters apply. The film grain layer adaptive indication information may include multiple pieces of picture resolution information corresponding to different film grain parameters. For example, when the picture resolution reaches 720 p (1280×720), one set of film grain parameters apply; when the resolution reaches 1080 p (1920×1080), another set of film grain parameters apply; and when the resolution reaches 4 K (3840×2160), yet another set of film grain parameters apply. The film grain layer adaptive indication information may also be film grain layer adaptive mode information (that is, film grain adaptive layer flag) fg_layer_adaptive_mode. fg_layer_adaptive_mode indicates adaptive film grain processing is enabled for decoded pictures corresponding to which layer flags or resolution. For example, the value 0 of fg_layer_adaptive_mode indicates that film grain is applied to decoded pictures corresponding to all layer flags or resolution; the value 1 of fg_layer_adaptive_mode indicates that adaptive film grain processing is enabled for decoded pictures corresponding to all layers except the base layer (layer flag 0); and the value 2 of fg_layer_adaptive_mode indicates that adaptive film grain processing is enabled for only decoded pictures corresponding to the highest enhancement layer (whose layer flag value is equal to the value of vps_max_layers_minus1).

In S3, it is determined whether to enable adaptive film grain processing for the decoded picture; if yes, S4 is performed; otherwise, S1 is performed.

As described in S2, when the film grain layer adaptive indication information is layer flag information corresponding to the film grain parameters or picture resolution information corresponding to the film grain parameters, and it can be determined, based on this information, that decoded pictures corresponding to at least one layer flag have no corresponding film grain parameters; or when the film grain layer adaptive indication information is film grain layer adaptive mode information, and it can be determined, based on the value of the film grain layer adaptive mode fg_layer_adaptive_mode, that film grain processing is not enabled for decoded pictures corresponding to at least one decoded layer flag, it is required to determine whether to enable adaptive film grain processing for the decoded picture. The determination method is as follows: Based on the layer flag or resolution corresponding to the decoded picture, it is determined whether film grain processing is not enabled or no corresponding film grain parameters exist. If film grain processing is not enabled or no corresponding film grain parameters exist, S1 is performed, where the acquired bitstream may be the bitstream corresponding to the next frame of the decoded picture or may be a sub-bitstream of a different layer but of the same frame as the decoded picture. The second decoded picture parsed from the bitstream may be the next frame of the decoded picture or may be the same frame as the decoded picture but of different quality or resolution.

In S4, film grain parameters corresponding to the decoded picture are acquired based on the film grain layer adaptive indication information.

According to the description in S2, the film grain layer adaptive indication information may be the layer flag information corresponding to the film grain parameters or the picture resolution information corresponding to the film grain parameters. The corresponding film grain parameters are acquired based on the layer flag or resolution of the decoded picture.

In S5, film grain corresponding to the decoded picture is synthesized based on the film grain parameters.

Based on the film grain model flag in the film grain parameters and the film grain parameters corresponding to the film grain synthesis method indicated by the film grain model flag, the film grain corresponding to each region of the decoded picture is synthesized.

In S6, the film grain is added to the decoded picture.

### Embodiment five

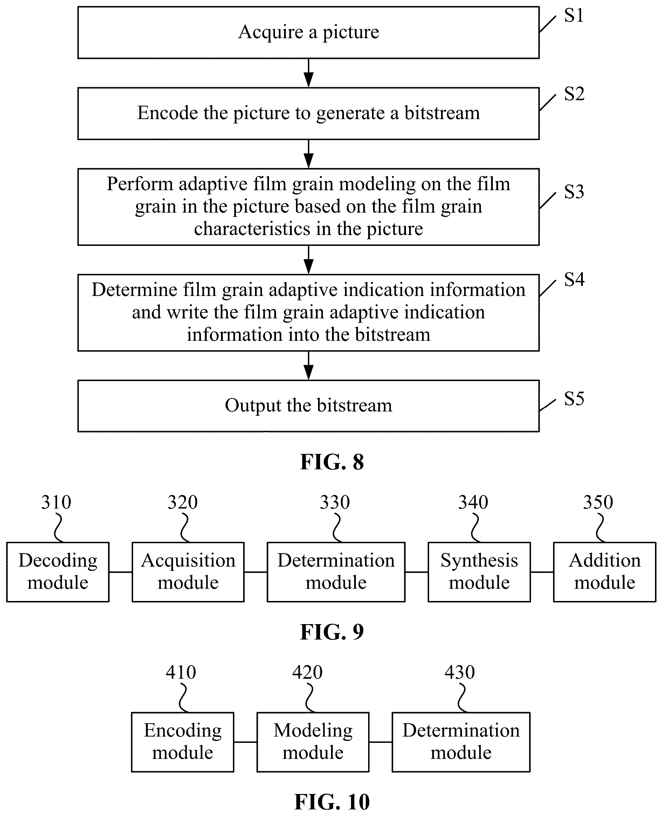

This embodiment provides an encoding method for a video picture bitstream. The encoding method is applied to an encoding apparatus for an input video picture. The input of the apparatus is a source video picture. The output of the apparatus is a video picture bitstream or a media file. FIG. 8 is a flowchart of video picture bitstream encoding according to an embodiment. See FIG. 8.

In S1, a picture is acquired, where the picture may be a single picture or may be a frame from a video sequence.

In S2, the picture is encoded to generate a bitstream.

There are various related technologies for encoding the picture to generate a bitstream, such as the H.26x series standards. The picture encoding standard is not limited here. The details are not described here.

In S3, adaptive film grain modeling is performed on the film grain in the picture based on the film grain characteristics in the picture.

The film grain characteristics may be the film grain characteristics of the entire picture or the film grain characteristics of different regions in the picture. The film grain characteristics include the film grain intensity and film grain scaling parameters. Adaptive film grain modeling includes model adaptive film grain modeling, region adaptive film grain modeling, and layer adaptive film grain modeling. Model adaptive film grain modeling refers to selecting the most suitable film grain modeling method based on the film grain characteristics in the picture. Model adaptive film grain modeling includes frequency-based film grain modeling, autoregressive-coefficient-based film grain modeling. Region adaptive film grain modeling refers to film grain modeling of different regions in the picture based on the film grain characteristics of different regions in the picture. The film grain modeling methods used for different regions may be the same or different. When the same film grain modeling method is used for different regions, the film grain parameters corresponding to different regions may be not completely the same. Layer adaptive film grain modeling refers to determining, based on the film grain characteristics in the picture, which output pictures require film grain to be enabled.

The layer adaptive film grain modeling is enabled only when the picture uses scalable coding.

In S4, film grain adaptive indication information is determined and written into the bitstream.

According to the adaptive film grain modeling process of S3, the film grain adaptive indication information corresponding to the picture is determined. The film grain adaptive indication information may include at least one of film grain model adaptive indication information, film grain region adaptive indication information, or film grain layer adaptive indication information.

In S5, the bitstream is output.

The bitstream may be a picture bitstream or a transport stream or media file containing a picture bitstream.

### Embodiment six

This embodiment provides an example of an SEI message for implementing film grain adaptive processing. Table 7 describes the syntax table of the SEI message for film grain adaptive processing, where the syntax structure and semantic information may correspond to combination examples of various cases described in any of the preceding embodiments.

**Table 7 Syntax of SEI message for film grain adaptive processing**

| | |
|---|---|
| film_grain_adaptive( payloadSize ) { | Descriptor |
| fg_characteristic_base_parameters() | |
| fg_adaptive_enabled_flag | u(1) |
| if(fg_adaptive_enabled_flag){ | |
| fg_layers_adaptive_flag | u(1) |
| if(fg_adaptive_enabled_flag) | |
| fg_layer_adaptive_mode | u(2) |
| fg_region_adaptive_flag | u(1) |
| fg_model_adaptive_flag | u(1) |
| if (fg_mode_adaptive_flag) | |
| fg_model_adaptive_mode | u(1) |
| if (fg_region_adaptive_flag){ | |
| num_of_adaptive_rect_regions | ue(v) |
| for(i=0; i <= num_of_adaptive_regions; i++) { | |
| adaptive_rect_region_top[i] | ue(v) |
| adaptive_rect_region_left[i] | ue(v) |
| adaptive_rect_region_width[i] | ue(v) |
| adaptive_rect_region_height[i] | ue(v) |
| if (fg_model_adaptive_flag) { | |
| fg_region_model_parameters[i]() | |
| } | |
| else { | |
| fg _region_parameters() | |
| } | |
| } | |
| } | |
| else { | |
| if (fg_model_adaptive_flag) | |
| fg_model_parameters() | |
| } | |
| } | |

### Film grain adaptive SEI message semantic

fg_adaptive_enabled_flag (that is, film grain adaptive enabled flag): When fg_adaptive_enabled_flag is equal to 1, it is indicated that film grain adaptive processing is allowed to be enabled for the to-be-decoded bitstream associated with the SEI message. When fg_adaptive_enabled_flag is equal to 0, it is indicated that film grain adaptive processing is not allowed to be enabled for the to-be-decoded bitstream associated with the SEI message. The film grain adaptive processing may include at least one of film grain model adaptation, film grain region adaptation, or film grain layer adaptation. Accordingly, the film grain adaptive enabled flag may also be at least one of a film grain model adaptive enabled flag, a film grain region adaptive enabled flag, or a film grain layer adaptive enabled flag. The SEI message may also include a film grain adaptive flag that indicates whether film grain adaptive processing is enabled for the bitstream associated with the SEI message. fg_characteristic_base_parameters (that is, film grain base parameters) indicate the base film grain parameters used for the bitstream associated with the SEI message. The film grain parameters include film grain model parameters and film grain processing parameters. The film grain model parameters may be the same as those defined in the film grain characteristic SEI message in the H.274 standard or may be those defined in the AV1 standard. The details are not elaborated here. If fg_characteristic_base_parameters() in the SEI message is empty, it is indicated that the previous associated film grain parameters of the bitstream are also applicable to the bitstream associated with the current SEI message.

fg_layers_adaptive_flag (that is, film grain layer adaptive flag): When fg_layers_adaptive_flag is equal to 1, it is indicated that film grain layer adaptive processing is enabled for the to-be-decoded bitstream associated with the SEI message. When fg_layers_adaptive_flag is equal to 0, it is indicated that film grain layer adaptive processing is not enabled for the to-be-decoded bitstream associated with the SEI message.

fg_model_adaptive_flag (film grain model adaptive flag): When fg_model_adaptive_flag is equal to 1, it is indicated that film grain model adaptive processing is enabled for the to-be-decoded bitstream associated with the SEI message. When fg_model_adaptive_flag is equal to 0, it is indicated that film grain model adaptive processing is not enabled for the to-be-decoded bitstream associated with the SEI message.

fg_model_adaptive_mode: film grain model adaptive processing mode (film grain model adaptive mode) indicates the adaptive scope of the switched film grain model.

fg_layer_adaptive_mode: indicates the film grain layer adaptive processing mode (film grain layer adaptive mode). The value of fg_layer_adaptive_mode determines which output pictures of different qualities in the bitstream require film grain to be added. For the value of fg_layer_adaptive_mode, see the detailed description in step 3 of embodiment four. fg_region_adaptive_flag (film grain region adaptive flag): When fg_region_adaptive_flag is equal to 1, it is indicated that the to-be-decoded bitstream associated with the SEI message supports enabling film grain region adaptive processing. When fg_region_adaptive_flag is equal to 0, it is indicated that the to-be-decoded bitstream associated with the SEI message does not support or does not enable film grain region adaptive processing.

num_of_adaptive_rect_regions (number parameter): indicates the number of rectangular regions to which film grain adaptive processing is applied. adaptive_rect_region_top[i] (position parameter): indicates the topmost position of the ith rectangular region to which film grain adaptive processing is applied. adaptive_rect_region_left[i] (position parameter): indicates the rightmost position of the ith rectangular region to which film grain adaptive processing is applied. adaptive_rect_region_width[i] (dimension parameter): indicates the width of the ith rectangular region to which film grain adaptive processing is applied. adaptive_rect_region_height[i] (dimension parameter): indicates the height of the ith rectangular region to which film grain adaptive processing is applied. fg_region_model_parameters[i] (film grain region model parameters): indicates the film grain parameters corresponding to the ith rectangular region to which film grain adaptive processing is applied. The film grain parameters include film grain model parameters and film grain processing parameters.

fg_region_parameters[i] (film grain region processing parameters) indicates the film grain processing parameters corresponding to the ith rectangular region to which film grain adaptive processing is applied. The film grain model parameters are consistent with the film grain model parameters in fg_characteristic_base_parameters().

In this embodiment, only an example of the syntax structure and semantic information of the film grain adaptive processing SEI message is provided. In practical application, only part of the syntax elements and associated semantic information may be included as long as the method of any one of embodiments one to five can be implemented.

An embodiment of this application provides a decoding apparatus. FIG. 9 is a diagram illustrating the structure of a decoding apparatus according to an embodiment. As shown in FIG. 9, the decoding apparatus includes a decoding module 310, an acquisition module 320, a determination module 330, a synthesis module 340, and an addition module 350.

The decoding module 310 is configured to decode a bitstream to obtain a decoded picture.

The acquisition module 320 is configured to acquire film grain adaptive indication information corresponding to the decoded picture.

The determination module 330 is configured to determine film grain parameters corresponding to the decoded picture based on the film grain adaptive indication information.

The synthesis module 340 is configured to synthesize film grain corresponding to the decoded picture based on the film grain parameters.

The addition module 350 is configured to add the film grain to the decoded picture.

The decoding device of this embodiment performs adaptive film grain modeling and synthesis based on film grain characteristics, enabling more accurate simulation of naturally generated film grain effects and thus providing viewers with an enhanced viewing experience.

In an embodiment, the film grain adaptive indication information includes at least one of film grain model adaptive indication information, film grain region adaptive indication information, or film grain layer adaptive indication information.

In an embodiment, the film grain adaptive indication information includes at least one of a film grain adaptive enabled flag that indicates whether film grain adaptive processing is allowed to be enabled; or a film grain adaptive flag that indicates whether film grain adaptive processing is enabled.

In an embodiment, the film grain parameters include a film grain model parameter and a film grain processing parameter, and the film grain processing parameter corresponds to a film grain processing method corresponding to the film grain model parameter.

In an embodiment, the film grain adaptive indication information includes at least one of a film grain model adaptive enabled flag that indicates whether film grain model adaptive processing is allowed to be enabled; a film grain model adaptive flag that indicates whether film grain model adaptive processing is enabled; or a film grain model adaptive mode that indicates the scope to which a film grain model is applied.

In an embodiment, the acquisition module 320 is configured to determine the film grain model adaptive indication information based on the type of a supplemental enhancement information (SEI) message.

In an embodiment, the film grain adaptive indication information includes film grain model adaptive indication information; and determining the film grain parameters corresponding to the decoded picture based on the film grain adaptive indication information includes determining, based on the film grain model adaptive indication information, whether to switch a film grain model; in response to switching the film grain model, acquiring film grain parameters corresponding to the switched film grain model; and in response to not switching the film grain model, acquiring film grain parameters corresponding to the film grain model not switched.

In an embodiment, the film grain adaptive indication information includes film grain region adaptive indication information; and the film grain region adaptive indication information includes at least one of a film grain region adaptive enabled flag that indicates whether film grain region adaptive processing is allowed to be enabled; a film grain region adaptive flag that indicates whether film grain region adaptive processing is enabled; or region information corresponding to the film grain parameters, where the region information indicates a region in the decoded picture where the film grain parameters are applied.

In an embodiment, the film grain adaptive indication information includes film grain region adaptive indication information; determining the film grain parameters corresponding to the decoded picture based on the film grain adaptive indication information includes acquiring film grain parameters corresponding to different regions in the decoded picture based on the film grain region adaptive indication information; and synthesizing the film grain corresponding to the decoded picture based on the film grain parameters includes synthesizing film grain corresponding to a region based on film grain parameters corresponding to the region.

In an embodiment, the film grain adaptive indication information includes film grain layer adaptive indication information; and the film grain layer adaptive indication information includes at least one of a film grain layer adaptive enabled flag that indicates whether film grain layer adaptive processing is allowed to be enabled; a film grain layer adaptive flag that indicates whether film grain layer adaptive processing is enabled; a film grain adaptive layer flag that indicates whether film grain layer adaptive processing is enabled for a layer corresponding to the flag; layer flag information corresponding to the film grain parameters, where the layer flag information indicates a layer flag corresponding to the decoded picture to which the film grain parameters are applied; picture resolution information corresponding to the film grain parameters, where the picture resolution information indicates a picture resolution corresponding to the decoded picture to which the film grain parameters are applied; or a film grain layer adaptive mode that indicates the scope to which film grain layer adaptive processing is applied.

In an embodiment, the film grain adaptive indication information includes film grain layer adaptive indication information; determining the film grain parameters corresponding to the decoded picture based on the film grain adaptive indication information includes acquiring film grain parameters corresponding to different layers in the decoded picture based on the film grain layer adaptive indication information; and synthesizing the film grain corresponding to the decoded picture based on the film grain parameters includes synthesizing film grain corresponding to a layer based on film grain parameters corresponding to the layer.

In an embodiment, the film grain adaptive indication information is included in an SEI message, and the SEI message includes at least one of a film grain adaptive enabled flag that indicates whether film grain adaptive processing is allowed to be enabled for a bitstream associated with the SEI message; a film grain adaptive flag that indicates whether film grain model adaptive processing is enabled for a bitstream associated with the SEI message; a film grain base parameter that indicates a film grain base parameter used by a bitstream associated with the SEI message; a film grain layer adaptive flag that indicates whether film grain layer adaptive processing is enabled for a bitstream associated with the SEI message; a film grain model adaptive flag that indicates whether film grain model adaptive processing is enabled for a bitstream associated with the SEI message; a film grain model adaptive mode that indicates the scope to which a film grain model is applied; a film grain layer adaptive mode that indicates whether a film grain layer adaptive processing mode is enabled for a bitstream associated with the SEI message; a film grain region adaptive flag that indicates whether film grain region adaptive processing is enabled for a bitstream associated with the SEI message; a number parameter that indicates the number of rectangular regions to which film grain adaptive processing is applied; a position parameter that indicates the position of a rectangular region to which film grain adaptive processing is applied; a dimension parameter that indicates a dimension of a rectangular region to which film grain adaptive processing is applied; a film grain region model parameter that indicates a film grain model parameter corresponding to a rectangular region to which film grain adaptive processing is applied; or a film grain region processing parameter that indicates a film grain processing parameter corresponding to a rectangular region to which film grain adaptive processing is applied.

The decoding apparatus of this embodiment and the decoding method of any previous embodiment belong to the same concept. For technical details not described in detail in this embodiment, see any previous embodiment. This embodiment has the same effects as the decoding method.

An embodiment of this application provides an encoding apparatus. FIG. 10 is a diagram illustrating the structure of an encoding apparatus according to an embodiment. As shown in FIG. 10, the encoding apparatus includes an encoding module 410, a modeling module 420, and a determination module 430.

The encoding module 410 is configured to encode a picture to generate a bitstream.

The modeling module 420 is configured to model film grain in the picture based on film grain characteristics in the picture.

The determination module 430 is configured to determine film grain adaptive indication information and write the film grain adaptive indication information into the bitstream.

The encoding device of this embodiment performs adaptive film grain modeling and synthesis based on film grain characteristics, enabling more accurate simulation of naturally generated film grain effects and thus providing viewers with an enhanced viewing experience.

In an embodiment, the film grain adaptive indication information includes at least one of film grain model adaptive indication information, film grain region adaptive indication information, or film grain layer adaptive indication information.

In an embodiment, the film grain adaptive indication information includes at least one of a film grain adaptive enabled flag that indicates whether film grain adaptive processing is allowed to be enabled; or a film grain adaptive flag that indicates whether film grain adaptive processing is enabled.

In an embodiment, the determination module 430 is configured to perform at least one of the following: performing model adaptive film grain modeling on the film grain in the picture based on the film grain characteristics in the picture; performing region adaptive film grain modeling on the film grain in the picture based on the film grain characteristics in the picture; or performing layer adaptive film grain modeling on the film grain in the picture based on the film grain characteristics in the picture.

The encoding apparatus of this embodiment and the encoding method of any previous embodiment belong to the same concept. For technical details not described in detail in this embodiment, see any previous embodiment. This embodiment has the same effects as the encoding method.

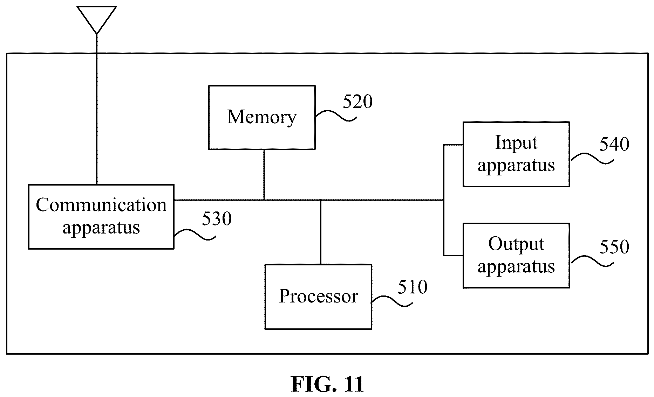

An embodiment of this application provides an electronic device. The electronic device may serve as a decoding end or an encoding end. FIG. 11 is a diagram illustrating the hardware structure of an electronic device according to an embodiment. As shown in FIG. 11, the electronic device of this application includes a processor 510 and a memory 520. One or more processors 510 are configured in the communication device. FIG. 5 illustrates one processor 510 by way of example. The memory 520 is configured to store one or more programs. The one or more programs are executed by the one or more processors 510 to cause the one or more processors 510 to perform the decoding method or the encoding method of any embodiment of this application.

The electronic device further includes a communication apparatus 530, an input apparatus 540, and an output apparatus 550.

The processor 510, the memory 520, the communication apparatus 530, the input apparatus 540, and the output apparatus 550 in the electronic device may be connected through a bus or in other manners, and the connection through the bus is shown as an example in FIG. 5.

The input apparatus 540 may be configured to receive inputted digital or character information and generate key signal input related to user settings and function control of the electronic device. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the decoding method or the encoding method of any embodiment of this application (for example, the decoding module 310, the acquisition module 320, the determination module 330, the synthesis module 340, and the addition module 350 of the decoding apparatus or the encoding module 410, the modeling module 420, and the determination module 430 of the encoding apparatus). The memory 520 may include a program storage region and a data storage region, where the program storage region may store an operating system and an application program required by at least one function, and the data storage region may store data or the like created according to the use of the communication node. Additionally, the memory 520 may include a high-speed random-access memory and may also include a nonvolatile memory such as at least one disk memory, a flash memory, or another nonvolatile solid-state memory. In some examples, the memory 520 may further include memories located remotely relative to the processors 510, and these remote memories may be connected to the communication node via a network. Examples of the network include the Internet, an intranet, a local area network, a mobile communication network and a combination thereof.

An embodiment of this application provides a storage medium. The storage medium stores a computer program which, when executed by a processor, causes the processor to perform the decoding method or the encoding method of any embodiment of this application. The decoding method is applied to a decoding end. The decoding method includes decoding a bitstream to obtain a decoded picture; acquiring film grain adaptive indication information corresponding to the decoded picture; determining film grain parameters corresponding to the decoded picture based on the film grain adaptive indication information; synthesizing film grain corresponding to the decoded picture based on the film grain parameters; and adding the film grain to the decoded picture.

The encoding method is applied to an encoding end. The encoding method includes encoding a picture to generate a bitstream; modeling film grain in the picture based on film grain characteristics in the picture; and determining film grain adaptive indication information and writing the film grain adaptive indication information into the bitstream.

A computer storage medium of an embodiment of this application may be one computer-readable medium or any combination of multiple computer-readable media. The computer-readable medium may be a computer-readable signal medium or a computer-readable storage medium. The computer-readable storage medium may be an electrical, magnetic, optical, electromagnetic, infrared or semiconductor system, apparatus or device, or any combination thereof. Examples of the computer-readable storage medium include (a non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory device, a magnetic memory device, or any suitable combination thereof. The computer-readable storage medium may be any tangible medium including or storing a program. The program may be used by or used in conjunction with an instruction execution system, apparatus, or device.

The computer-readable signal medium may include a data signal propagated in a baseband or as part of a carrier, where the data signal carries computer-readable program codes. This propagated data signal may take multiple forms including an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable media may be transmitted by any suitable medium including a wireless medium, a wire, an optical cable, a radio frequency (RF), or any suitable combination thereof.

Computer program codes for performing the operations of this application may be written in one or more programming languages or a combination of multiple programming languages. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN), or may be connected to an external computer (for example, via the Internet provided by an Internet service provider).

The preceding are example embodiments of this application and are not intended to limit the scope of this application.

It is to be understood by those skilled in the art that the term "user equipment" encompasses any appropriate type of wireless user device, such as a mobile phone, a portable data processing apparatus, a portable web browser, or a vehicle-mounted mobile station.

Generally speaking, embodiments of this application may be implemented in hardware or special-purpose circuits, software, logic, or any combination thereof. For example, some aspects may be implemented in hardware while other aspects may be implemented in firmware or software executable by a controller, a microprocessor, or another computing apparatus, though this application is not limited thereto.

Embodiments of this application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of this application may represent program operations, may represent interconnected logic circuits, modules, and functions, or may represent a combination of program operations and logic circuits, modules, and functions. Computer programs may be stored in a memory. The memory may be of any type suitable to the local technical environment and may be implemented by using any suitable data storage technology. For example, the memory may be a read-only memory (ROM), a random access memory (RAM), an optical memory apparatus and system (digital video disc (DVD) or compact disc (CD)), or the like. Computer-readable media may include non-transitory storage media. The data processor may be of any type suitable to the local technical environment, such as a general purpose computer, a special purpose computer, a microprocessor, a digital signal processing (DSP), an application specific integrated circuit (ASIC), a field-programmable gate array (FPGA), and a processor based on a multi-core processor architecture.

## Claims

1. A decoding method, the method being applied to a decoding end and comprising:
decoding a bitstream to obtain a decoded picture;
acquiring film grain adaptive indication information corresponding to the decoded picture;
determining film grain parameters corresponding to the decoded picture based on the film grain adaptive indication information;
synthesizing film grain corresponding to the decoded picture based on the film grain parameters; and
adding the film grain to the decoded picture.

2. The method of claim 1, wherein the film grain adaptive indication information comprises at least one of film grain model adaptive indication information, film grain region adaptive indication information, or film grain layer adaptive indication information.

3. The method of claim 1, wherein the film grain adaptive indication information comprises at least one of:
a film grain adaptive enabled flag that indicates whether film grain adaptive processing is allowed to be enabled; or
a film grain adaptive flag that indicates whether film grain adaptive processing is enabled.

4. The method of claim 1, wherein the film grain parameters comprise a film grain model parameter and a film grain processing parameter, and the film grain processing parameter corresponds to a film grain processing method corresponding to the film grain model parameter.

5. The method of claim 1, wherein the film grain adaptive indication information comprises at least one of:
a film grain model adaptive enabled flag that indicates whether film grain model adaptive processing is allowed to be enabled;
a film grain model adaptive flag that indicates whether film grain model adaptive processing is enabled; or
a film grain model adaptive mode that indicates a scope to which a film grain model is applied.

6. The method of claim 1, wherein acquiring the film grain adaptive indication information corresponding to the decoded picture comprises:
determining the film grain model adaptive indication information based on a type of a supplemental enhancement information (SEI) message.

7. The method of claim 1, wherein the film grain adaptive indication information comprises film grain model adaptive indication information; and
determining the film grain parameters corresponding to the decoded picture based on the film grain adaptive indication information comprises:
determining, based on the film grain model adaptive indication information, whether to switch a film grain model;
in response to switching the film grain model, acquiring film grain parameters corresponding to the switched film grain model; and
in response to not switching the film grain model, acquiring film grain parameters corresponding to the film grain model not switched.

8. The method of claim 1, wherein the film grain adaptive indication information comprises film grain region adaptive indication information; and
the film grain region adaptive indication information comprises at least one of:
a film grain region adaptive enabled flag that indicates whether film grain region adaptive processing is allowed to be enabled;
a film grain region adaptive flag that indicates whether film grain region adaptive processing is enabled; or
region information corresponding to the film grain parameters, wherein the region information indicates a region in the decoded picture where the film grain parameters are applied.

9. The method of claim 1, wherein the film grain adaptive indication information comprises film grain region adaptive indication information;
determining the film grain parameters corresponding to the decoded picture based on the film grain adaptive indication information comprises:
acquiring film grain parameters corresponding to different regions in the decoded picture based on the film grain region adaptive indication information; and
synthesizing the film grain corresponding to the decoded picture based on the film grain parameters comprises:
synthesizing film grain corresponding to a region of the different regions based on film grain parameters corresponding to the region.

10. The method of claim 1, wherein the film grain adaptive indication information comprises film grain layer adaptive indication information; and
the film grain layer adaptive indication information comprises at least one of:
a film grain layer adaptive enabled flag that indicates whether film grain layer adaptive processing is allowed to be enabled;
a film grain layer adaptive flag that indicates whether film grain layer adaptive processing is enabled;
a film grain adaptive layer flag that indicates whether film grain layer adaptive processing is enabled for a layer corresponding to the flag;
layer flag information corresponding to the film grain parameters, wherein the layer flag information indicates a layer flag corresponding to the decoded picture to which the film grain parameters are applied;
picture resolution information corresponding to the film grain parameters, wherein the picture resolution information indicates a picture resolution corresponding to the decoded picture to which the film grain parameters are applied; or
a film grain layer adaptive mode that indicates a scope to which film grain layer adaptive processing is applied.

11. The method of claim 1, wherein the film grain adaptive indication information comprises film grain layer adaptive indication information;
determining the film grain parameters corresponding to the decoded picture based on the film grain adaptive indication information comprises:
acquiring film grain parameters corresponding to different layers in the decoded picture based on the film grain layer adaptive indication information; and
synthesizing the film grain corresponding to the decoded picture based on the film grain parameters comprises:
synthesizing film grain corresponding to a layer of the different layers based on film grain parameters corresponding to the layer.

12. The method of claim 1, wherein the film grain adaptive indication information is comprised in an SEI message, and the SEI message comprises at least one of:
a film grain adaptive enabled flag that indicates whether film grain adaptive processing is allowed to be enabled for a bitstream associated with the SEI message;
a film grain adaptive flag that indicates whether film grain model adaptive processing is enabled for a bitstream associated with the SEI message;
a film grain base parameter that indicates a film grain base parameter used by a bitstream associated with the SEI message;
a film grain layer adaptive flag that indicates whether film grain layer adaptive processing is enabled for a bitstream associated with the SEI message;
a film grain model adaptive flag that indicates whether film grain model adaptive processing is enabled for a bitstream associated with the SEI message;
a film grain model adaptive mode that indicates a scope to which a film grain model is applied;
a film grain layer adaptive mode that indicates whether a film grain layer adaptive processing mode is enabled for a bitstream associated with the SEI message;
a film grain region adaptive flag that indicates whether film grain region adaptive processing is enabled for a bitstream associated with the SEI message;
a number parameter that indicates a number of rectangular regions to which film grain adaptive processing is applied;
a position parameter that indicates a position of a rectangular region to which film grain adaptive processing is applied;
a dimension parameter that indicates a dimension of a rectangular region to which film grain adaptive processing is applied;
a film grain region model parameter that indicates a film grain model parameter corresponding to a rectangular region to which film grain adaptive processing is applied; or
a film grain region processing parameter that indicates a film grain processing parameter corresponding to a rectangular region to which film grain adaptive processing is applied.

13. An encoding method, the method being applied to an encoding end and comprising:
encoding a picture to generate a bitstream;
modeling film grain in the picture based on film grain characteristics in the picture; and
determining film grain adaptive indication information and writing the film grain adaptive indication information into the bitstream.

14. The method of claim 13, wherein the film grain adaptive indication information comprises at least one of film grain model adaptive indication information, film grain region adaptive indication information, or film grain layer adaptive indication information.

15. The method of claim 13, wherein the film grain adaptive indication information comprises at least one of:
a film grain adaptive enabled flag that indicates whether film grain adaptive processing is allowed to be enabled; or
a film grain adaptive flag that indicates whether film grain adaptive processing is enabled.

16. The method of claim 13, wherein modeling the film grain in the picture based on the film grain characteristics in the picture comprises at least one of the following:
performing model adaptive film grain modeling on the film grain in the picture based on the film grain characteristics in the picture;
performing region adaptive film grain modeling on the film grain in the picture based on the film grain characteristics in the picture; or
performing layer adaptive film grain modeling on the film grain in the picture based on the film grain characteristics in the picture.

17. An electronic device, comprising a memory and at least one processor, wherein
the memory is configured to store at least one program; and
when executed by the at least one processor, the at least one program causes the at least one processor to perform the decoding method of any one of claims 1 to 12 or the encoding method of any one of claims 13 to 16.

18. A computer-readable storage medium storing a computer program which, when executed by a processor, causes the processor to perform the decoding method of any one of claims 1 to 12 or the encoding method of any one of claims 13 to 16.
